# EUROPÄISCHE PATENTANMELDUNG

(11) **EP 1 767 080 A1**
(43) Veröffentlichungstag der Anmeldung: **28.03.2007**
(21) Anmeldenummer: 06019629.2
(22) Anmeldetag: 20.09.2006
(51) Int. Cl.: A01C 7/08, A01C 5/06

(54) **Landwirtschaftliche Gerätekombination, insbesondere zum Ausbringen von Verteilgütern**

(30) Priorität: 22.09.2005 DE 102005045242
(71) Anmelder: Rabe Agri GmbH, 49152 Bad Essen (DE)
(72) Erfinder: Gehrke, Rudolf, Dipl.-Ing., 49152 Bad Essen (DE)

(57) **Zusammenfassung**

Landwirtschaftliche Gerätekombination (1), insbesondere zum Ausbringen von Verteilgütern, bestehend aus zumindest einer Verteilmaschine (2) mit einer Hydraulikanlage (3) und einem hydraulisch angetriebenen ersten Gebläse (4) sowie einer wahlweise angehängten zweiten Verteilmaschine (5) mit einem hydraulisch angetriebenen zweiten Gebläse (6), wobei beim Kombinationsbetrieb das erste Gebläse (4) vorzugsweise von einer zapfwellenbetriebenen Hydraulikpumpe (7) mit Drucköl versorgt wird, und das zweite Gebläse (6) von der Hydraulikanlage (9) des Schleppers (8) oder von der zapfwellenbetriebenen Hydraulikpumpe (7) mit Drucköl versorgt wird, und dass beim Solobetrieb der Verteilmaschinen (2,5) vorzugsweise die Versorgung der einzeln betriebenen Gebläse (4,6) mit Drucköl von der Hydraulikanlage (9) des Schleppers (8) erfolgt.

## Beschreibung

### Beschreibung

Die Erfindung betrifft eine landwirtschaftliche Gerätekombination, insbesondere zum Ausbringen von Verteilgütern gemäß des Oberbegriffes des Patentanspruches 1.

Landwirtschaftliche Gerätekombinationen, insbesondere zur Bodenbearbeitung und zum Ausbringen von Saatgut sind aus der landwirtschaftlichen Praxis bekannt. Eine derartige Gerätekombination wird beispielsweise in DE 42 28 019 C2 vorgeschlagen. Die beschriebene Gerätekombination besteht aus einer zapfwellenbetriebenen Kreiselegge mit einer nachgeordneten Stützwalze und einer darüber angeordneten Sämaschine, die einen Saatgutbehälter und ein hydraulisch angetriebenes Gebläse für die Saatgutverteilung aufweist. Die Säschare zur Saatgutablage in den Boden sind hinter der Stützwalze angeordnet. Der Antrieb des Gebläses erfolgt von einem Hydraulikmotor, der von einer Hydraulikpumpe mit Drucköl versorgt wird. Die Hydraulikpumpe ist dabei auf der Rückseite des Kreiseleggen-Hauptgetriebes angeordnet.

Diese Art von hydraulischem Gebläseantrieb ist nur möglich, wenn ein zapfwellenbetriebenes Bodenbearbeitungsgerät mit einer Sämaschine gekoppelt wird. Bei einer Gerätekombination mit einem gezogenen Bodenbearbeitungsgerät und einer Sämaschine ist der Betrieb der zapfwellenbetriebenen Hydraulikpumpe nur direkt von der Schlepperzapfwelle möglich.

Eine derartige Gerätekombination mit einem hydraulischen Gebläseantrieb ist durch die europäische Patentschrift EP 0 760 199 B1 offenbart. Diese pneumatische Direktsämaschine weist eine Hydraulikanlage mit einer zapfwellenbetriebenen Tandempumpe auf, die den Hydraulikmotor für das Gebläse mit Drucköl versorgt, sowie einen oder mehrere weitere Verbraucher. Durch diese Hydraulikanlage besteht die Möglichkeit, dass die Gerätekombination unabhängig von der Hydraulikanlage des Schleppers nutzbar ist.

Soll bei dieser Gerätekombination das Gebläse sowohl von der zapfwellenbetriebenen Hydraulikpumpe betreibbar sein als auch von der Hydraulikanlage des Schleppers, so ist jedes Mal geräteseitig ein Umbau an der Hydraulikanlage erforderlich.

Der Erfindung liegt die Aufgabe zu Grunde, eine Hydraulikanlage für eine Gerätekombination zu schaffen, die so konzipiert ist, dass in einfacher Weise zumindest ein Hydraulikmotor für ein Gebläse einer Gerätekombination sowohl von der zapfwellenbetriebenen Hydraulikpumpe als auch von der Hydraulikanlage des Schleppers mit Drucköl versorgbar ist.

Diese Aufgabe wird erfindungsgemäß nach den Merkmalen des Patentanspruches 1 gelöst, wobei die weiteren Patentansprüche in vorteilhafter Weise ergänzende Lösungen zeigen.

Die erfindungsgemäße landwirtschaftliche Gerätekombination weist eine Hydraulikanlage für den Betrieb von mindestens einem Gebläse und/oder weiteren hydraulischen Verbrauchern auf. Die Versorgung der/des hydraulisch angetriebenen Gebläse/s mit Drucköl kann mittels einer Umschaltvorrichtung wahlweise von der Hydraulikanlage des Schleppers oder von einer zapfwellenbetriebenen Hydraulikpumpe erfolgen.

Die Umschaltvorrichtung ist auf den Leistungsbedarf des Gebläses abgestimmt und so dimensioniert, dass der Durchflussquerschnitt für die Rücklaufleitung zum Tank größer ist als der Durchflussquerschnitt der Druckleitung. Dadurch wird eine geringe Hydraulikölerwärmung erreicht, der Staudruck in der Rücklaufleitung wird gering gehalten und die Lebensdauer vom Hydraulikmotor erhöht sich, insbesondere verbessert sich die Lebensdauer der Wellendichtung.

Für den Fall, dass zwei Verteilmaschinen mit jeweils einem hydraulisch angetriebenen Gebläse zu einer Gerätekombination zusammengekoppelt werden, reicht die vom Schlepper zur Verfügung stehende Druckölmenge oft nicht aus, besonders dann nicht, wenn zusätzliche Druckölverbraucher zugeschaltet werden. Zur Vermeidung von Gebläsedrehzahlschwankungen benötigt der Hydraulikmotor für das Gebläse eine stetige und nahezu konstante Versorgung mit Drucköl. Mittels einer zapfwellenbetriebenen Hydraulikpumpe besteht während des Kombinationsbetriebes der Verteilmaschinen die Möglichkeit, mehrere Hydraulikmotoren gleichzeitig mit der für den Betrieb der Gebläse erforderlichen Druckölmenge zu versorgen.

Bei der Verwendung einer zapfwellenangetriebenen Tandempumpe können zwei Gebläse unabhängig von der Hydraulikanlage des Schleppers betrieben werden. Jedoch beim Solobetrieb der ersten Verteilmaschine muss dafür gesorgt werden, dass der nicht benötigte Pumpenteil der Tandempumpe, die in der Regel aus zwei Zahnradpumpen besteht, das Drucköl zur Vermeidung von Energieverlusten nahezu drucklos umlaufend fördert. Dies ist möglich, indem die Druckleitung mit der Rücklaufleitung (Tankleitung) verbunden wird. Die Druckölversorgung für das Gebläse der zweiten Verteilmaschine erfolgt dann während des Solobetriebes von der Hydraulikanlage des Schleppers oder von einer zusätzlichen zapfwellenbetriebenen Hydraulikpumpe, die vom Schlepper angetrieben wird.

Weitere Einzelheiten der Erfindung sind den Unteransprüchen, der Beispielbeschreibung und den Zeichnungen zu entnehmen. Hierzu zeigen die nachfolgenden Zeichnungen:

**Fig. 1** eine erfindungsgemäße aus zwei Verteilmaschinen bestehende Gerätekombination in der Seitenansicht

**Fig. 2** den Hydraulikschaltplan für die Hydraulikanlage zum Betrieb der Gebläse einer Gerätekombination gemäß Fig. 1

**Fig. 3** den Hydraulikschaltplan für die Hydraulikanlage zum Betrieb des Gebläses während des Soloeinsatzes

**Fig. 4** eine Umschaltvorrichtung mit zwei Kugelhähnen in der Vorderansicht

**Fig. 5** Umschaltvorrichtung mit zwei Kugelhähnen in der Draufsicht gemäß Fig. 4

**Fig. 6** den Hydraulikschaltplan für die Hydraulikanlage mit Steuerleitung zum Schlepper für den Betrieb der Gebläse einer Gerätekombination gemäß Fig. 1

**Fig. 7** eine Gerätekombination, bestehend aus einer Verteilmaschine für körniges Verteilgut und einer Verteilmaschine für Flüssigkeiten in der Seitenansicht.

**Fig. 8** einen Hydraulikschaltplan für die Hydraulikanlage zum Betrieb von zwei Hydraulikmotoren und einer Tandempumpe

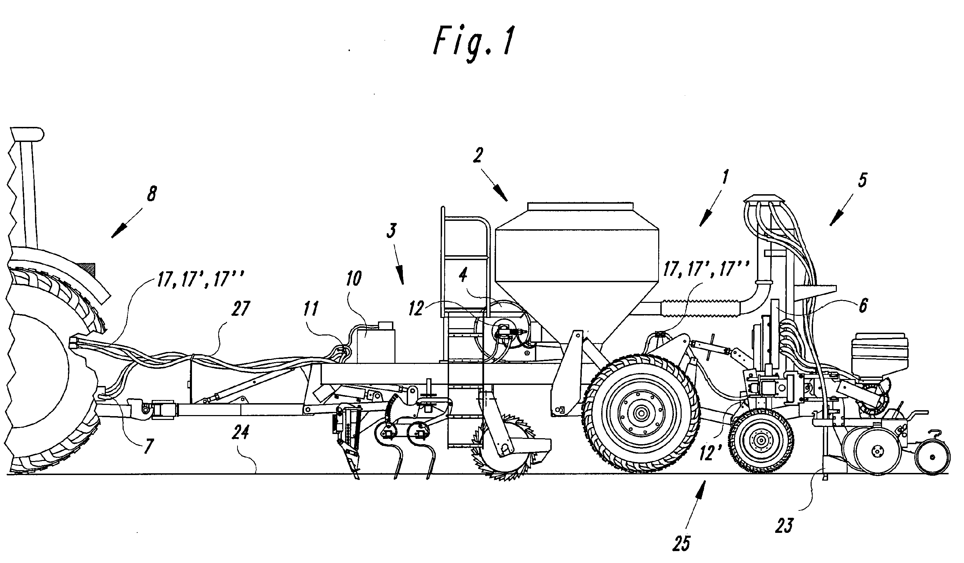

Die **Fig. 1** stellt eine landwirtschaftliche Gerätekombination **1** mit einer vorderen Verteilmaschine **2** und einer zweiten dahinter angeordneten Verteilmaschine **5** dar. Diese Gerätekombination **1** ist an einem Schlepper **8** angehängt, der eine nicht dargestellte Hydraulikanlage **9** aufweist. Die Hydraulikanlage **3** der Gerätekombination **1** ist mittels Hydraulikkupplungen **17,17',17"** mit dem Schlepper verbunden, wobei die Hydraulikkupplung **17"** nur bei einem Schlepper **8** vorhanden ist, der eine Steuerleitung **S** für die externe Steuerung der Hydraulikanlage **9** aufweist.

Die Gerätekombination **1** weist eine erste Verteilmaschine **2** mit einem Gebläse **4** und einem Hydraulikmotor **12** auf und eine zweite Verteilmaschine **5** mit einem Gebläse **6** und einem Hydraulikmotor **12'.** Zur einfacheren Darstellung ist nur die Hydraulikanlage **3** für das Gebläse **4,6** dargestellt. Die nicht dargestellten Hydraulikfunktionen arbeiten bei der dargestellten Gerätekombination **1** unabhängig von den Hydraulikfunktionen des Gebläses **4,6.** Die erste Verteilmaschine **2** ist zum Verteilen von körnigem landwirtschaftlichen Gut, insbesondere zum Verteilen von Saatgut oder Mineraldünger. In der dargestellten Ausführung verteilt die erste Verteilmaschine **2** Mineraldünger in die Säschare **23.** Es ist aber auch möglich, das Verteilgut auf der Bodenoberfläche **24** zu verteilen. Die zweite Verteilmaschine **5** ist zur Einzelkornablage von Saatgut vorgesehen. Es besteht aber auch die Möglichkeit, eine andere Verteilmaschinenbauart mit der ersten Verteilmaschine **2** zu kombinieren. Am Ende der ersten Verteilmaschine **2** sind die Kuppelvorrichtung **25** und die Hydraulikkupplungen **17,17'** zum Kuppeln der Verteilmaschine **5** angeordnet sowie bei Bedarf die Hydraulikkupplung **17".** Zwischen dem Schlepper **8** und dem Gebläse **4** ist der Hydraulikbehälter **10** und die Umschaltvorrichtung **11** angeordnet. Verbunden sind die einzelnen Komponenten der Hydraulikanlage **3** durch die Hydraulikleitungen **27.**

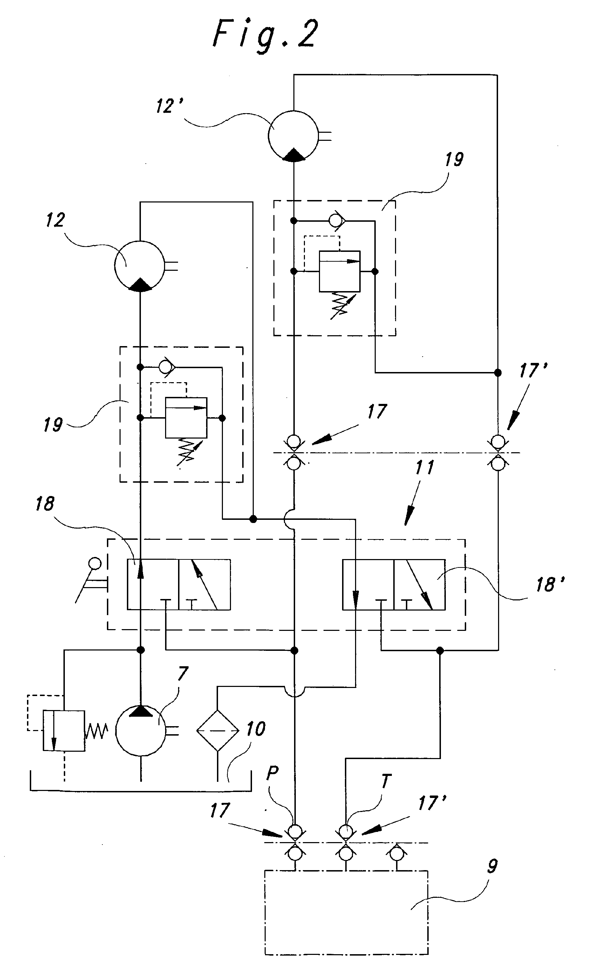

Der Schaltplan in **Fig. 2** für die Hydraulikanlage **3** der Gerätekombination **1** aus **Fig. 1** zeigt die Anordnung der Hydraulikkomponenten für den Betrieb des ersten Gebläses **4** und des zweiten Gebläses **6** auf. Das erste Gebläse **4** wird vom Hydraulikmotor **12** angetrieben. Die Druckölversorgung für den Hydraulikmotor **12** erfolgt von der zapfwellenbetriebenen Hydraulikpumpe **7.** Zwischen der Hydraulikpumpe **7** und dem Hydraulikmotor **12** ist die Umschaltvorrichtung **11** mit dem Kugelhahn **18** angeordnet, sowie das Gebläseregelventil **19.** Der Kugelhahn **18** ist als 3-Wege-Hahn ausgebildet. Während des Betriebes der Hydraulikpumpe **7** ist der Kugelhahn **18** zum Hydraulikmotor **12** geöffnet. Die Druckleitung **P** von der Hydraulikanlage **9** des Schleppers **8** ist im Kugelhahn **18** verschlossen. Das abfließende Hydrauliköl vom Hydraulikmotor **12** fließt über den Kugelhahn **18'** in den Hydraulikölbehälter **10** zurück. Die Tankleitung **T** zur Hydraulikanlage **9** des Schleppers **8** ist dabei im Kugelhahn **18'** verschlossen.

Der Hydraulikmotor **12'** vom zweiten Gebläse **6** wird von der Hydraulikanlage **9** des Schleppers **8** mit Drucköl versorgt. Das Drucköl fließt über die Hydraulikkupplung **17** durch die Druckleitung **P** zum Hydraulikmotor **12',** wobei vor dem Hydraulikmotor **12'** das Gebläseregelventil **19** angeordnet ist. Das abfließende Hydrauliköl vom Hydraulikmotor **12'** fließt direkt über die Hydraulikkupplung **17'** in die Tankleitung **T** der Hydraulikanlage **9.**

Die Umschaltvorrichtung **11** der Hydraulikanlage **3** muss nicht zwingend aus den Kugelhähnen **18,18'** bestehen. Es können auch andere Umschaltventile verwendet werden. Sinnvoll ist es jedoch, dass die Ventile für die Druckleitung **P** und die Tankleitung **T** gleichzeitig umschalten, und dass der Querschnitt in der Umschaltvorrichtung **11** für die Tankleitung **T** größer ist als der Querschnitt für die Druckleitung **P.**

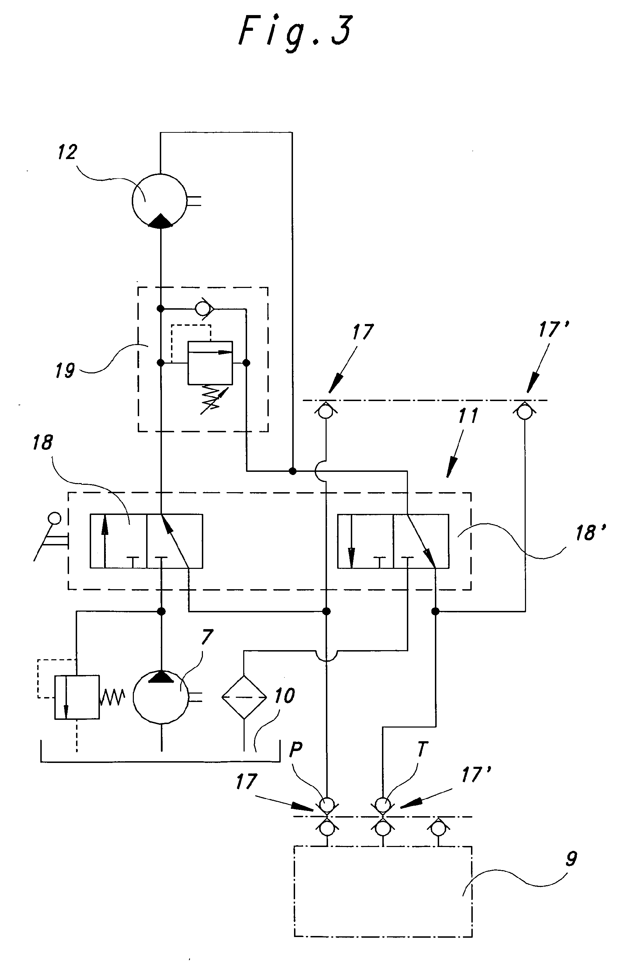

Der Hydraulikschaltplan in **Fig. 3** zeigt den Hydraulikmotor **12** für den Betrieb über die Hydraulikanlage **9** des Schleppers **8.** Die Umschaltvorrichtung **11** ist so geschaltet, dass das Drucköl über die Hydraulikkupplung **17** in die Druckleitung **P,** den Kugelhahn **18** und dem Gebläseregelventil **19** zum Hydraulikmotor **12** fließt. Die Hydraulikpumpe **7** ist dabei außer Betrieb, und der Kugelhahn **18** zur Hydraulikpumpe **7** ist verschlossen. Das vom Hydraulikmotor **12** abfließende Hydrauliköl wird über den Kugelhahn **18'** und die Hydraulikkupplung **17'** in die Tankleitung **T** der Hydraulikanlage **9** zurückgeführt. Der Anschluß zum Hydraulikölbehälter **10** ist dabei im Kugelhahn **18'** verschlossen.

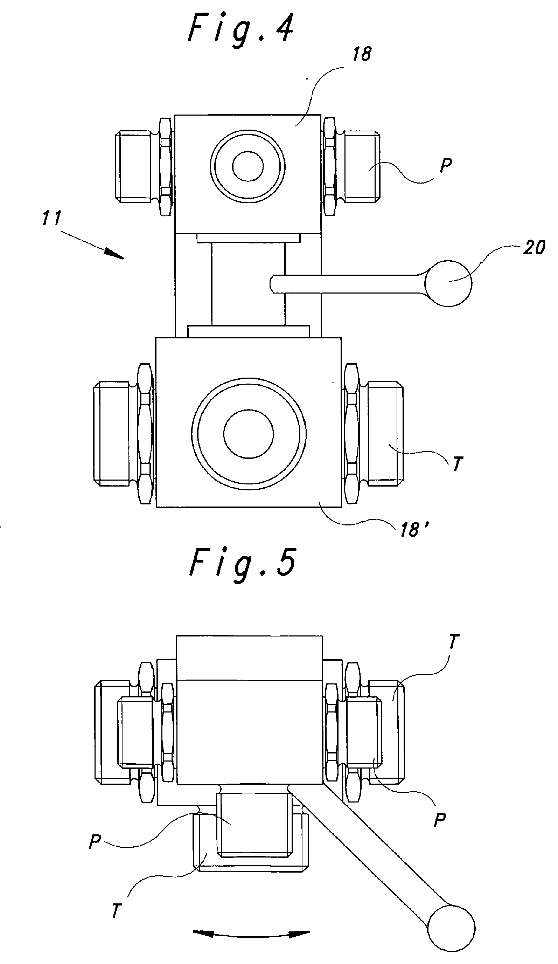

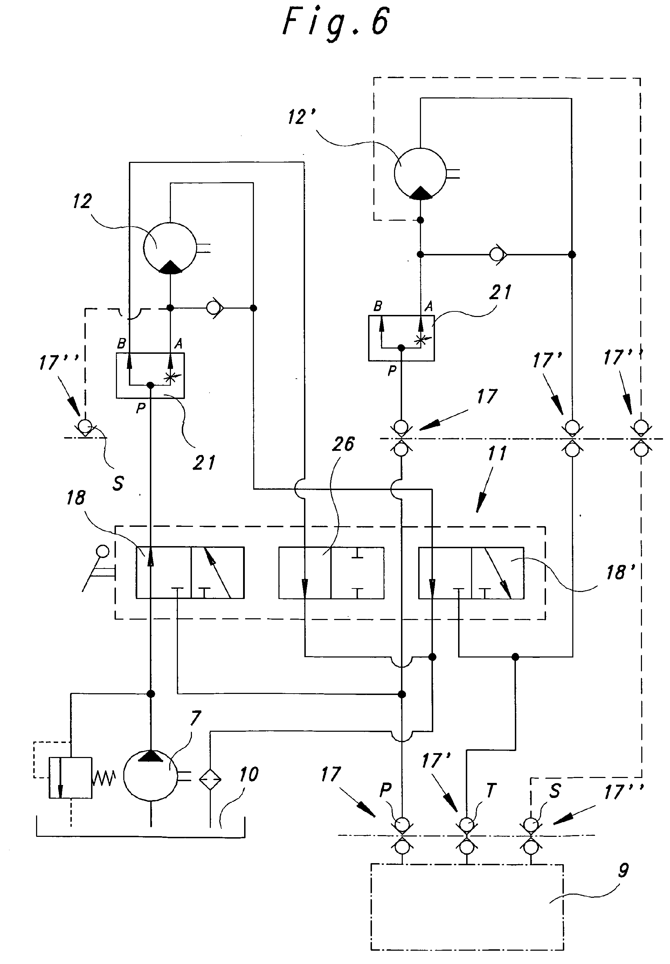

In den **Fig. 4** und **Fig. 5** ist eine Umschaltvorrichtung **11** mit einem Kugelhahn **18** für die Druckleitung **P** und ein größerer Kugelhahn **18'** für die Tankleitung **T** dargestellt. Der Umschalthebel **20** für das gemeinsame Umschalten ist zwischen den Kugelhähnen **18,18'** angeordnet.

Die Hydraulikanlage **9** in **Fig. 6** weist zu der Hydraulikkupplung **17** für die Druckleitung **P** und der Hydraulikkupplung **17'** für die Tankleitung **T** noch eine Hydraulikkupplung **17"** für die Steuerleitung **S** auf. Der erste Hydraulikmotor **12** wird von der Hydraulikpumpe **7** mit Drucköl versorgt. Die Umschaltvorrichtung **11** weist den Kugelhahn **18** für die Druckleitung **P** auf sowie den Kugelhahn **18'** für die Tankleitung **T** und den Absperrhahn **26** für den Reststrom **B** vom Stromregelventil **21.** Das Stromregelventil **21** zweigt das vom Hydraulikmotor **12** nicht benötigte Drucköl als Reststrom **B** in die Tankleitung **T** ab, die zum Hydraulikölbehälter **10** führt. Die Hydraulikkupplung **17"** ist dabei nicht angeschlossen, so dass die Steuerleitung **S** außer Funktion ist.

Der Hydraulikmotor **12'** vom zweiten Gebläse **6** wird von der Hydraulikanlage **9** mit Drucköl versorgt. Zwischen der Hydraulikkupplung **17** der Druckleitung **P** und dem Hydraulikmotor **12'** ist das Stromregelventil **21** angeordnet. Der Anschluß für den Reststrom **B** ist dabei verschlossen. Es ist aber auch möglich, ein Stromregelventil **21** in Zweiwegeausführung ohne Anschluss für den Reststrom **B** anzuordnen. Zwischen dem Anschluss für den Konstantstrom **A** des Stromregelventils **21** und dem Hydraulikmotor **12'** ist die Steuerleitung **S** abgezweigt. Die Steuerleitung **S** ist über die Hydraulikkupplung 17" mit der Hydraulikanlage 9 vom Schlepper 8 verbunden, wobei die Steuerleitung S den Druckölstrom vom Schlepper 8 für den Hydraulikmotor 12' steuert.

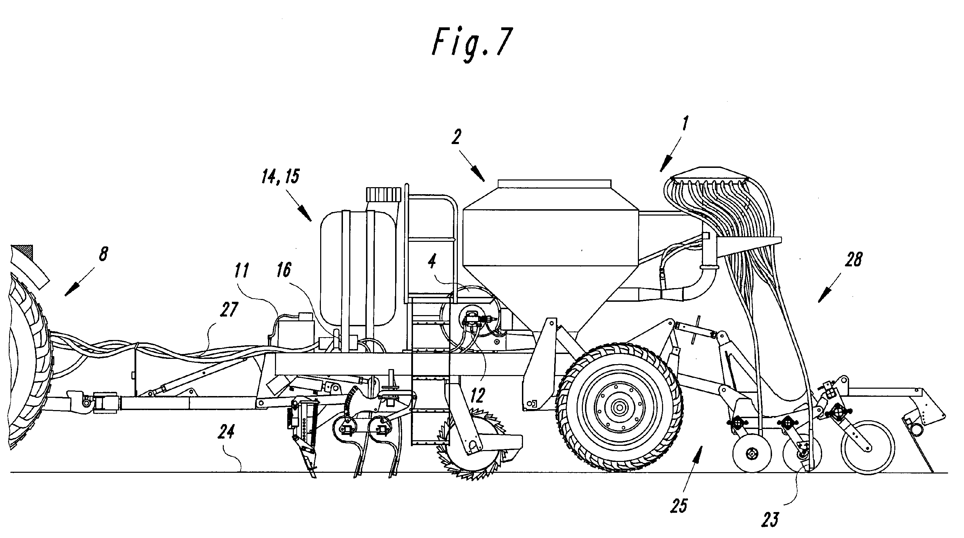

Die Gerätekombination 1 in Fig. 7 stellt eine Verteilmaschine 2 für das Ausbringen von körnigem Gut dar, insbesondere zum Ausbringen von Saatgut. Am hinteren Ende der Gerätekombination 1 ist die Verteilvorrichtung 28 mit den Säscharen 23 angeordnet. Die Säschare 23 legen das Verteilgut unterhalb der Bodenoberfläche 24 ab. Die Förderung des Verteilgutes innerhalb der Verteilmaschine 2 zu den Säscharen 23 erfolgt durch das Gebläse 4, welches vom Hydraulikmotor 12 angetrieben wird.

Vor dem Gebläse **4** ist auf der Gerätekombination **1** eine Flüssigkeitsverteileinrichtung **15** zum Ausbringen von Flüssigdünger oder Pflanzenschutzmittel angeordnet. Die flüssigen Ausbringmittel können sowohl oberhalb der Bodenoberfläche 24 verteilt werden als auch unterhalb der Bodenoberfläche 24. Gefördert wird das flüssige Ausbringmittel mittels einer Flüssigkeitspumpe 16, die vom Hydraulikmotor 12' angetrieben wird. Der Hydraulikmotor 12 für das Gebläse 4 und der Hydraulikmotor 12' für die Flüssigkeitspumpe 16 sind Teil der Hydraulikanlage 3, wobei der Hydraulikmotor 12 von der zapfwellenbetriebenen Hydraulikpumpe 7 mit Drucköl versorgt wird und der Hydraulikmotor 12' von der Hydraulikanlage 9 des Schleppers 8. Wird die Flüssigkeitsverteilvorrichtung 15 nicht benötigt, so besteht die Möglichkeit, auf einfache Weise durch das Umstellen der Umschaltvorrichtung 11 den Hydraulikmotor 12 von der Hydraulikanlage 9 des Schleppers 8 mit Drucköl zu versorgen.

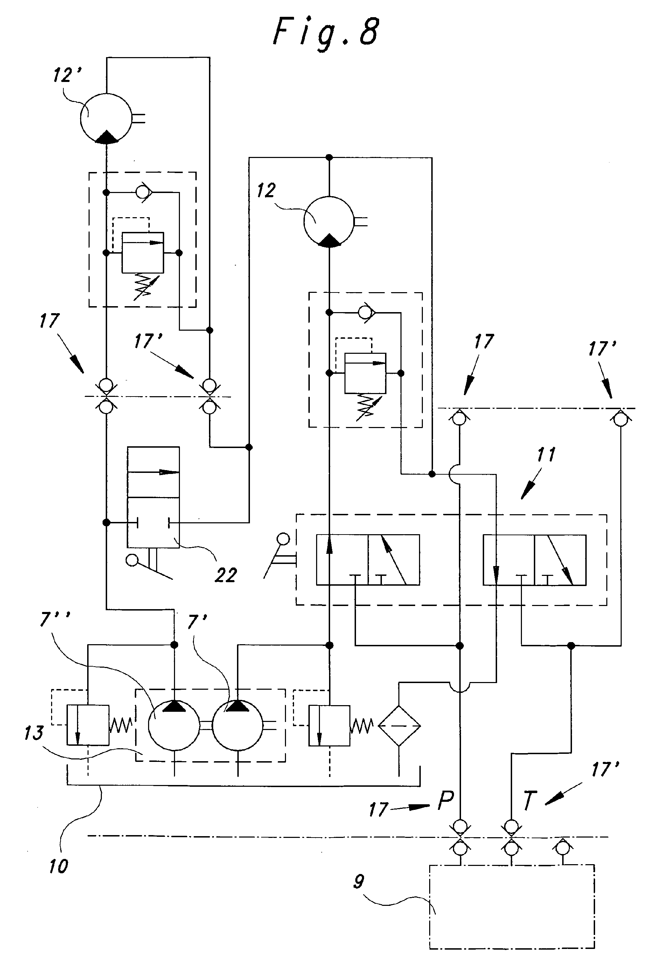

Der Hydraulikschaltplan für die Hydraulikanlage 3 mit einer Tandempumpe 13 und den unabhängig voneinander arbeitenden Hydraulikmotoren 12,12' wird in Fig. 8 dargestellt. Die Hydraulikpumpe 7' der Tandempumpe 13 versorgt den Hydraulikmotor 12 über die Umschaltvorrichtung 11 mit Drucköl. Die Hydraulikpumpe 7" der Tandempumpe 13 versorgt den Hydraulikmotor 12' mit Drucköl, dabei ist die Absperrvorrichtung **22** geschlossen. Von der Hydraulikanlage **9** des Schleppers **8** wird bei dieser Schaltungsanordnung kein Drucköl benötigt. Die Anschlüsse **17,17'** sind für andere Hydraulikfunktionen frei.

Wird nur der Hydraulikmotor 12 benötigt, so kann die Tandempumpe 13 außer Betrieb gesetzt werden, und die Druckölversorgung kann durch Umstellen der Umschaltvorrichtung 11 von der Hydraulikanlage 9 erfolgen. Es ist auch möglich, den Hydraulikmotor 12 allein von der Tandempumpe 13 mit Drucköl zu versorgen, dabei wird die Absperrvorrichtung 22 geöffnet. Der Hydraulikmotor 12' kann an den Hydraulikkupplungen 17,17' von der Hydraulikanlage 3 getrennt werden. Es besteht aber auch die Möglichkeit, den Hydraulikmotor 12' separat zu betreiben, indem die Hydraulikkupplungen 17,17' direkt an die Hydraulikanlage 9 angekoppelt werden.

### Bezugszeichenliste

- 1: Gerätekombination
- 2: Verteilmaschine
- 3: Hydraulikanlage
- 4: Gebläse
- 5: Verteilmaschine
- 6: Gebläse
- 7: Hydraulikpumpe
- 7': Hydraulikpumpe
- 7": Hydraulikpumpe
- 8: Schlepper
- 9: Hydraulikanlage
- 10: Hydraulikölbehälter
- 11: Umschaltvorrichtung
- 12: Hydraulikmotor
- 12': Hydraulikmotor
- 13: Tandempumpe
- 14: Vorrichtung
- 15: Flüssigkeitsverteilvorrichtung
- 16: Flüssigkeitspumpe
- 17: Hydraulikkupplung (P)
- 17': Hydraulikkupplung (T)
- 17": Hydraulikkupplung (S)
- 18: Kugelhahn (P)
- 18': Kugelhahn (T)

- 19: Gebläseregelventil
- 20: Umschalthebel
- 21: Stromregelventil
- 22: Absperrvorrichtung
- 23: Säschare
- 24: Bodenoberfläche
- 25: Kuppelvorrichtung
- 26: Absperrhahn
- 27: Hydraulikleitungen
- 28: Verteilvorrichtung
- P: Druckleitung
- T: Tankleitung
- S: Steuerleitung
- A: Konstantstrom
- B: Reststrom

## Patentansprüche

1. Landwirtschaftliche Gerätekombination (1), insbesondere zum Ausbringen von Verteilgütern, bestehend aus zumindest einer Verteilmaschine (2) mit einer Hydraulikanlage (3) und einem hydraulisch angetriebenen ersten Gebläse (4) sowie einer wahlweise angehängten zweiten Verteilmaschine (5) mit einem hydraulisch angetriebenen Gebläse (6), **dadurch gekennzeichnet, dass** beim Kombinationsbetrieb der Hydraulikmotor (12) vom ersten Gebläse (4) vorzugsweise von einer zapfwellenbetriebenen Hydraulikpumpe (7) mit Drucköl versorgt wird und der Hydraulikmotor (12') vom zweiten Gebläse (6) von der Hydraulikanlage (9) des Schleppers (8) oder von der zapfwellenbetriebenen Hydraulikpumpe (7) der Verteilmaschine (2) mit Drucköl versorgt wird, und dass beim Solobetrieb der ersten Verteilmaschine (2) oder der zweiten Verteilmaschine (5) vorzugsweise die Versorgung des ersten Gebläses (4) oder des zweiten Gebläses (6) mit Drucköl von der Hydraulikanlage (9) des Schleppers (8) erfolgt.

2. Landwirtschaftliche Gerätekombination **(1)** nach Anspruch 1, **dadurch gekennzeichnet, dass** die zapfwellenbetriebene Hydraulikpumpe (7) und der Hydraulikölbehälter (10) mittels einer Umschaltvorrichtung (11) von dem Hydraulikmotor (12) des Gebläses (4) trennbar ist und die Versorgung des Hydraulikmotors (12) mit Drucköl von der Hydraulikanlage (9) des Schleppers (8) erfolgt.

3. Landwirtschaftliche Gerätekombination (1) nach Anspruch 1 und 2, **dadurch gekennzeichnet, dass** die Umschaltvorrichtung (11) mindestens zwei parallel geschaltete 3-Wege-Kugelhähne (18,18') aufweist, die vorzugsweise auf die Durchflussmenge und Durchflussgeschwindigkeit der Hydraulikflüssigkeit abgestimmt sind.

4. Landwirtschaftliche Gerätekombination (1) nach einem oder mehreren der vorgenannten Ansprüche, **dadurch gekennzeichnet, dass** die Umschaltvorrichtung (11) vorzugsweise mindestens zwei unterschiedliche Durchflussquerschnitte aufweist.

5. Landwirtschaftliche Gerätekombination (1) nach einem oder mehreren der vorgenannten Ansprüche, **dadurch gekennzeichnet, dass** in der Druckleitung (P) vor dem Hydraulikmotor (12,12') jeweils ein Gebläseregelventil (19) angeordnet ist.

6. Landwirtschaftliche Gerätekombination (1) nach einem oder mehreren der vorgenannten Ansprüche, **dadurch gekennzeichnet, dass** für den Betrieb des Gebläses (4,6) bei einer Druckölversorgung von der Hydraulikanlage (9) des Schleppers (8) eine Steuerleitung (S) zwischen dem Stromregelventil (21) und der Hydraulikanlage (9) des Schleppers (8) angeordnet ist.

7. Landwirtschaftliche Gerätekombination (1) nach Anspruch 1 und 2, **dadurch gekennzeichnet, dass** die Hydraulikpumpe (7) zum Antrieb von zwei Gebläsen (4,6) oder zum Antrieb eines Gebläses (4) und weiterer Hydraulikfunktionen als Tandempumpe (13) ausgebildet ist.

8. Landwirtschaftliche Gerätekombination (1) nach einem oder mehreren der vorgenannten Ansprüche, **dadurch gekennzeichnet, dass** die Tandempumpe (13) wahlweise das erste Gebläse (4) und das zweite Gebläse (6) mit Drucköl versorgt oder das erste Gebläse (4) und eine im Dauerbetrieb oder Intervallbetrieb arbeitende Vorrichtung (14) mit Drucköl versorgt, die ein landwirtschaftliches Produkt bearbeitet oder verteilt.

9. Landwirtschaftliche Gerätekombination (1) nach einem oder mehreren der vorgenantnen Ansprüche, **dadurch gekennzeichnet, dass** die Vorrichtung (14) als Flüssigkeitsverteilvorrichtung (15) mit Flüssigkeitspumpe (16) ausgebildet ist.
